(19) Europäisches Patentamt
European Patent Office
Office européen des brevets

(11) EP 1 261 154 A2

(12) EUROPÄISCHE PATENTANMELDUNG

(43) Veröffentlichungstag:
27.11.2002 Patentblatt 2002/48

(51) Int Cl.[7]: **H04H 1/00**, G01S 11/10, G01S 5/12, G01C 21/26

(21) Anmeldenummer: **02011238.9**

(22) Anmeldetag: **22.05.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **23.05.2001 DE 10125046**

(71) Anmelder: **ROBERT BOSCH GMBH**
**70442 Stuttgart (DE)**

(72) Erfinder:
- **Gieske, Kurt**
  **31180 Gross Foerste (DE)**
- **Spreitz, Gerald**
  **30165 Hannover (DE)**

(54) **Navigationsgerät und Verfahren zur Standortbestimmung**

(57) Es wird ein Navigationsgerät bzw. ein Verfahren zur Standortbestimmung vorgeschlagen, die dazu dienen, ohne eine Ortungsvorrichtung aus empfangenen digitalen Funksignalen, die eine Senderkennung aufweisen, den Standort des Empfängers zu bestimmen. Dabei werden insbesondere DAB-Rundfunksignale verwendet, die mit dem TII-Symbol eine Senderkennung aufweisen. Durch Ermittlung der Phasendifferenzen ist eine Bestimmung der Position des Empfängers beim Empfang von Rundfunksignalen von zwei Sendern möglich. Bei nur einem Sender ist die Bestimmung der Geschwindigkeit und damit der Bewegungsrichtung des Empfängers möglich. Durch die Anfangseingabe eines Standorts kann dann der Standort des Empfängers permanent verfolgt werden.

Fig. 1

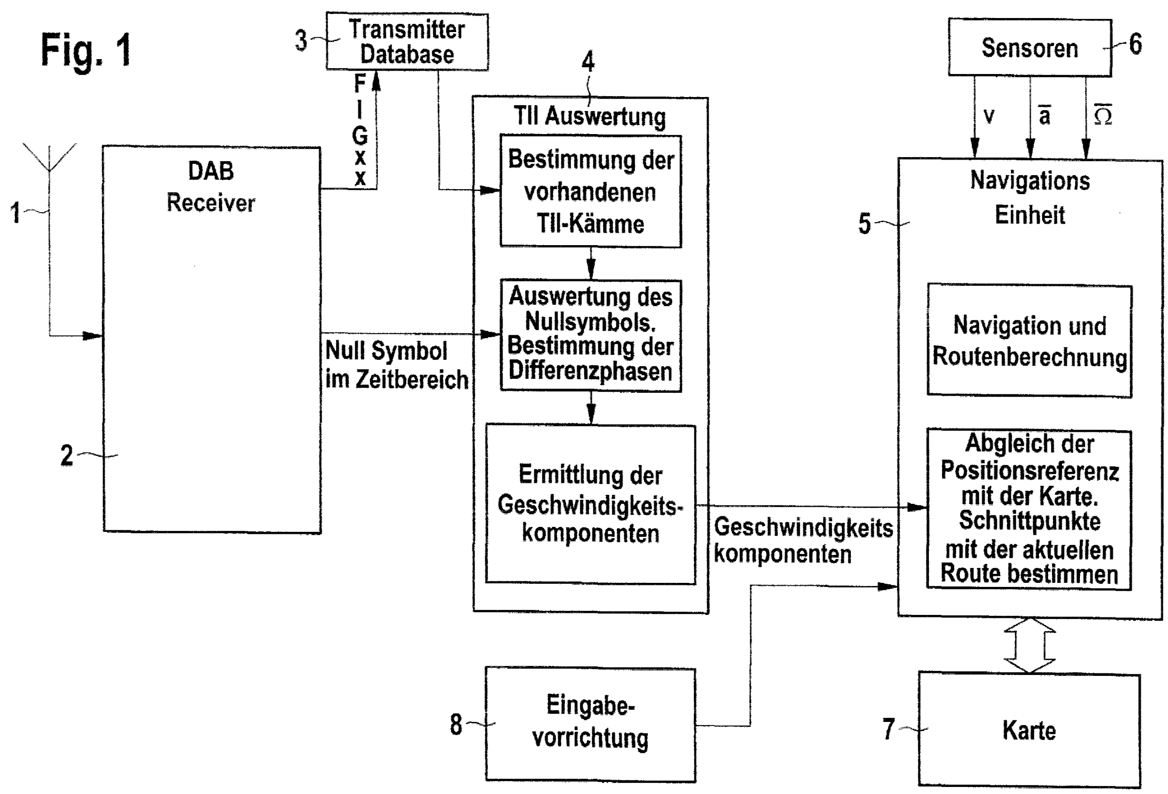


EP 1 261 154 A2

**Beschreibung**

Stand der Technik

Die Erfindung geht aus von einem Navigationsgerät bzw. einem Verfahren zur Standortbestimmung nach der Gattung der unabhängigen Patentansprüche.

Es ist bereits bekannt, dass bei dem digitalen Rundfunkübertragungsverfahren DAB (Digital Audio Broadcasting) beim Empfang von drei Sendern eine eindeutige Positionsbestimmung des Empfängers möglich ist. Dabei wird eine empfangene Senderidentifikation TII (Transmitter Identification Information) in den DAB-Signalen verwendet. Da die Positionen der einzelnen Sender bekannt sind oder im Signal übertragen werden, ist hierdurch eine Bestimmung des Gebiets möglich, in dem sich der Empfänger befindet. Weiterhin ist es möglich, durch Auswertung von Phasendifferenzen zwischen den Trägern der Identifizierungsmuster (TII-Symbol) mehrerer Sender den Laufzeitunterschied und damit die Entfernungsdifferenz zu diesen Sendern zu ermitteln. Da bei DAB mehrere Sender auf der gleichen Frequenz in einem sogenannten Gleichwellennetz senden, ihre Identifizierungsmuster aber unterschiedliche Träger nutzen, ist es möglich, gleichzeitig die Abstandsdifferenzen von mehreren Sendern zu ermitteln. Durch Auswertung der Abstandsdifferenzen von drei Sendern ist die Ermittlung der Position möglich.

Der Erfindung liegt daher die Aufgabe zugrunde, mit weniger als drei Sendern die Position eines Empfängers zu bestimmen.

Vorteile der Erfindung

Das erfindungsgemäße Navigationsgerät bzw. das erfindungsgemäße Verfahren zur Standortbestimmung mit den Merkmalen der unabhängigen Patentansprüche haben demgegenüber den Vorteil, dass in einer Navigationseinheit durch Auswertung der digitalen Rundfunksignale eines Senders die Bewegungsrichtung des Empfängers bestimmt werden kann. Durch Eingabe einer Anfangsposition ist es dann möglich, die Position genau zu verfolgen. Auch mit zwei Sendern ist jederzeit die Ortsbestimmung möglich. Damit wird bei einem Empfang von digitalen Funksignalen, wie es DAB-Signale sind, die die Senderkennung aufweisen, immer eine Ortsbestimmung möglich sein.

Durch die in den abhängigen Ansprüchen aufgeführten Maßnahmen und Weiterbildungen sind vorteilhafte Verbesserungen des in den unabhängigen Ansprüchen angegebenen Navigationsgeräts bzw. Verfahrens zur Standortbestimmung möglich.

Besonders vorteilhaft ist, dass ein Navigationsrechner im erfindungsgemäßen Navigationsgerät den berechneten Standort mit geographischen Daten und der berechneten Route abgleicht. Damit wird eine Plausibilisierung der bestimmten Daten vorgenommen.

Zeichnung

Ausführungsbeispiele der Erfindung sind in der Zeichnung dargestellt und werden in der nachfolgenden Beschreibung näher erläutert. Es zeigen

Figur 1 ein Blockschaltbild eines erfindungsgemäßen Navigationsgeräts,
Figur 2 die Bestimmung der Bewegungsrichtung aus dem Empfang von digitalen Funksignalen eines Senders,
Figur 3 die Bestimmung der Position aus dem Empfang von digitalen Funksignalen von zwei Sendern und
Figur 4 ein Flußdiagramm des erfindungsgemäßen Verfahrens zur Positionsbestimmung.

Beschreibung

Durch die Einführung von digitalen Rundfunk- und Funksignalen ist es möglich, wenn in diesen Funksignalen eine Senderkennung übertragen wird, diese Funksignale zur Positionsbestimmung zu nutzen. Damit wird es möglich, eine Navigation ohne eine Ortungsvorrichtung, wie es ein GPS-(Global Positioning System)Empfänger ist, zu realisieren.

Durch Einfangen des Nullsymbols in exakten Zeitabständen kann durch eine Phasenverschiebung ein Geschwindigkeitsvektor bestimmt werden. In der Navigationseinheit kann durch Auswertung der Sensoren und durch einen Vergleich mit der Karte die Position genauer ermittelt werden. Durch fortgesetzte Iteration kann die richtige Position relativ genau ermittelt und stabil verfolgt werden. Durch diese Anordnung ist dazu auch der Empfang nur eines Senders ausreichend.

**Positionsermittlung beim Empfang von einem Sender**

Das Verfahren, wie oben beschrieben, wertet ein Signal aus, das von drei Sendern gleichzeitig empfangen wurde. Im Gegensatz dazu wertet das neue Verfahren Signale aus, die von einem oder zwei Sendern in einem exakten Zeitabstand von N*96 ms empfangen wurden. Dabei wird ausgenutzt, dass das in ein DAB-Signal eingetastetes TII-Symbol als kontinuierliches Signal angesehen werden kann, wenn dieses nur während der Null-Symbole betrachtet wird. Begründung am Beispiel von DAB-Mode 1: Ein TII-Signal besitzt ausschließlich Frequenzanteile bei Vielfachen von 1kHz. Da im Sender das TII exakt im Abstand von N*96ms neu eingetastet wird, ist dieses Signal während der Null-Symbole identisch mit einem kontinuierlich ausgestrahltem TII-Signal.
Das kontinuierlich ausgestrahlte Signal kann vereinfacht aus einer Summe von Einzelsignalen folgender Form beschrieben werden:

$$A(x,t) = A_0 \cdot e^{j(\omega t + \beta x)}$$

$$\beta = \omega / c_0$$

($c_0$ = Lichtgeschwindigkeit). Zur Auswertung wird die Phase der Einzelsignale benötigt.

$$\varphi(x,t) = \omega t + \beta x$$

Zwei Einzelsignale können beim TII-Symbol laut Spezifikation zu einem Transmitterpaar mit einer Frequenzdifferenz von 1kHz vorausgesetzt werden. Die Differenz der Phasen dieses Transmitterpaares wird zum Zeitpunkt $T_0$ bestimmt. Diesem Zeitpunkt ist ein exakter Abstand zum Sender $x_0$ zugeordnet.

$$\varphi_{2m}(x, T_0) = \omega_{2m} T_0 + \beta_{2m} x_0$$

$$\varphi_{2m+1}(x, T_0) = \omega_{2m+1} T_0 + \beta_{2m+1} x_0$$

$$\Delta\varphi(x, T_0) = \Delta\omega(T_0 - x_0 / c_0)$$

Zu einem exakt N*96 ms entfernten Zeitpunkt $T_1$ wird diese Messung nochmals durchgeführt

$$\varphi_{2m}(x, T_1) = \omega_{2m} T_1 + \beta_{2m} x_1$$

$$\varphi_{2m+1}(x, T_1) = \omega_{2m+1} T_1 + \beta_{2m+1} x_1$$

$$\Delta\varphi(x, T_1) = \Delta\omega(T_1 - x_1 / c_0)$$

Die Differenz aus den zu den beiden Zeitpunkten gewonnenen Differenzphasen liefert eine weiter Differenzphase, die abhängig von der bekannten Zeitdauer zwischen den beiden Messungen und der Abstandsänderung zum Sender ist.

$$\begin{aligned}\Delta\Phi &= \Delta\varphi(x_1, T_1) - \Delta\varphi(x_0, T_0)\\ &= \Delta\omega\Delta T + \Delta\omega / c_0 \cdot \Delta x\end{aligned}$$

Somit lassen sich die Abstandsänderung und auch die Geschwindigkeit radial zum Sender ermitteln.

$$\Delta = \frac{\Delta\Phi - \Delta\omega \cdot \Delta T}{\Delta\omega} \cdot c_0$$

$$v_R = \frac{\Delta x}{\Delta T}$$

Die ermittelte Geschwindigkeit $v_R$ ist radial zum Sender und somit als Richtungsvektor anzusehen. Zusammen mit der wahren Geschwindigkeit $v_T$ des Fahrzeuges (Tachosignal), läßt sich bei bekanntem Standort die Richtung des Fahrzeuges bestimmen, wie aus Fig. 2 entnommen werden kann. Das Geschwindigkeits-Dreieck kann auf jedem Punkt des Kreises liegen. Der Winkel $\alpha$ ist ebenfalls zweideutig, was durch das gespiegelte gestrichelte Dreieck dargestellt ist.
Durch Vorgabe des Standortes und durch Vergleich mit der Straßenkarte (Map-Matching) können die Mehrdeutigkeiten eliminiert werden.

**Positionsermittlung beim Empfang von 2 Sendern**

Nach dem eben beschriebenen Verfahren ist es möglich den Winkel $\alpha 1$ zwischen der wahren Bewegungsrichtung und der Bewegungsrichtung radial zum Sender zu ermitteln. Ebenso ist dies möglich für den Sender 2 mit dem entsprechenden Winkel $\alpha 2$.
Durch Auswertung der Phasendifferenz zwischen den Signalen der beiden Sender ist die Laufzeitdifferenzen und damit die Entfernungsdifferenz zu den beiden Sendern ermittelbar. Schematisch ist diese Situation in Fig. 3 dargestellt, wo ein Dreieck, das durch die Senderstandorte des Senders 1 und 2 sowie der Position des Empfängers gebildet wird, gezeigt ist.
Bekannte Größen sind:

- Position der Sender aus ihrer ID und ihrem Eintrag in einer Tabelle
- Damit Abstand c der beiden Sender
- Entfernungsdifferenz m = a-b zwischen den Sendern aus Laufzeitdifferenz
- Winkel $\chi = 180° - (\alpha_1+\alpha_2)$

Mit dem halben Umfang s mit:

$$s := \frac{a+b+c}{2} = \frac{m+b+b+c}{2} = b + \frac{c+m}{2}$$

und dem Halbwinkelsatz:

$$\tan\frac{\chi}{2} = \sqrt{\frac{(s-a)(s-b)}{s(s-c)}}$$

lassen sich die Abstände a und b in Fig. 3 zu den Sendern und damit die Position des Empfängers bestimmen.

$$b = \pm\sqrt{\frac{c^2\left(\left(\tan\left(\frac{\chi}{2}\right)\right)^2 + 1\right) - m^2}{4\left(\tan\left(\frac{\chi}{2}\right)\right)^2}} - \frac{m}{2} \qquad \text{und} \qquad a = m - b$$

Figur 1 zeigt als Blockschaltbild ein erfindungsgemäßes Navigationsgerät. Eine Antenne 1 ist an einen Eingang eines DAB-Empfängers 2 angeschlossen. Der DAB-Empfänger 2 ist mit einem Speicher 3 für die Senderkennungen über einen ersten Datenausgang verbunden. Über einen zweiten Datenausgang ist der DAB-Empfänger 2 mit einem Prozessor 4 zur Auswertung der Senderkennung, also hier des TII-Symbols verbunden. Der Speicher 3 ist über einen Datenausgang mit dem Prozessor 4 verbunden. Der Prozessor 4 übergibt über einen Datenausgang Daten an einen Navigationsrechner 5, der über einen zweiten, dritten und vierten Dateneingang von Sensoren 6 Werte erhält. Über einen fünften Dateneingang ist der Navigationsrechner 5 mit einer Eingabevorrichtung 8 verbunden, die zur Eingabe beispielsweise eines Anfangsstandortes dient. Über einen Datenein-/-ausgang ist der Navigationsrechner 5 mit einem Speicher 7 verbunden, der eine digitale Karte aufweist.

Die Eingabevorrichtung 8 ist hier als Tastatur ausgebildet.
Es ist jedoch möglich, dass die Eingabevorrichtung 8 auch als Sprachsteuerung oder als ein anderes haptisches Bedienelement ausgebildet ist.

Mit der Antenne 1 werden die digitalen Rundfunksignale, hier DAB-Signale, empfangen. Alternativ ist es möglich, dass auch andere Rundfunkübertragungsverfahren wie DRM (Digital Radio Mondiale), RDS (Radio Data System) oder DVB (Digital Video Broadcasting) sowie Mobilfunkverfahren wie GSM, GPRS oder UMTS verwendet werden.

Der DAB-Empfänger 2 verstärkt, filtert und setzt die empfangenen DAB-Signale in eine Zwischenfrequenz um und führt dann eine Digitalisierung dieser Signale durch. Im Abstand von n * 96 Millisekunden überträgt der DAB-Empfänger 2 dem Prozessor 4 das Nullsymbol im Zeitbereich. Der Prozessor 4 bestimmt die vorhandenen TII-Kämme, die als Frequenzkämme ausgebildet sind, und wertet dann das Nullsymbol aus, wobei die Bestimmung, wie oben dargestellt, der Referenzphasen erfolgt. Daraus resultierend erfolgt die Ermittlung der Geschwindigkeitskomponenten. Diese Geschwindigkeitskomponenten werden dann dem Navigationsrechner 5 übertragen, der die Navigation und Routenberechnung zu einem mit der Eingabevorrichtung 8 eingegebenen Routenziel durchführt. Mit den Geschwindigkeitskomponenten und den Sensorenwerten Geschwindigkeit, Beschleunigung und Drehbeschleunigung, die mit einem Drehratensensor ermittelt wurde, sowie einem Abgleich der dadurch berechneten Positionsreferenz mit der digitalen Karte, die im Speicher 7 enthalten ist, wird ein Schnittpunkt mit der aktuellen Route zum eingegebenen Routenziel und damit die aktuelle Position bestimmt. Diese wird dann mit einer Anzeige und/oder einem Lautsprecher ausgegeben.

Figur 4 zeigt als Flußdiagramm das erfindungsgemäße Verfahren zur Standortbestimmung. In Verfahrensschritt 9 werden mit der Antenne 1 und dem DAB-Empfänger 2 die digitalen Rundfunksignale empfangen. In Verfahrensschritt 10 und 11 wird das Null- bzw. das TII-Symbol im Prozessor 4 ausgewertet. Wird nur ein Sender empfangen, wie in Verfahrensschritt 12 überprüft wird, dann wird in Verfahrensschritt 13 daraus die Richtung bestimmt und in Kombination mit der Anfangsposition, die an der Eingabevorrichtung 8 eingegeben wurde, in Verfahrensschritt 15 die aktuelle Position des Empfängers. Wird mehr als ein Empfänger empfangen, dann erfolgt in Verfahrensschritt 14, wie oben dargestellt, die Bestimmung der aktuellen Position. In Verfahrensschritt 16 wird dann die aktuelle Position optisch und/oder akustisch ausgegeben.

## Patentansprüche

1. Navigationsgerät, wobei das Navigationsgerät eine Eingabevorrichtung (8) zur Eingabe eines Routenziels und eines Standorts, einen Navigationsrechner (5) zur Berechnung einer Route zu dem eingegebenen Routenziel, einen Speicher (7) zur Bevorratung von geographischen Daten aufweist, **dadurch gekennzeichnet, dass** das Navigationsgerät mit einem Empfänger (2) für digitale Funksignale verbunden ist, wobei mit den digitalen Funksignalen Standorte von empfangenen Sendern empfangbar sind, und dass der Navigationsrechner (5) derart ausgebildet ist, dass der Navigationsrechner (5) bei Empfang der digitalen Funksignale von einem Sender eine Bewegungsrichtung des Navigationsgeräts und bei dem Empfang der digitalen Funksignale von zwei Sendern den Standort des Navigationsgeräts ermittelt.

2. Navigationsgerät nach Anspruch 1, **dadurch gekennzeichnet, dass** der Empfänger (2) als DAB-Empfänger ausgebildet ist.

3. Navigationsgerät nach Anspruch 1 oder 2, **dadurch gekennzeichnet, dass** der Navigationsrechner (5) mit den geographischen Daten und der berechneten Route den berechneten Standort abgleicht.

4. Navigationsgerät nach Anspruch 1, 2 oder 3, **dadurch gekennzeichnet, dass** mit der Eingabevorrichtung (8) ein Standort eingebbar ist.

5. Verfahren zur Standortbestimmung, wobei digitale Funksignale empfangen werden, **dadurch gekennzeichnet, dass** überprüft wird, ob ein oder zwei Sender empfangen werden, dass bei dem Empfang von den digitalen Funksignalen von einem Sender aus den digitalen Funksignalen eine Bewegungsrichtung ermittelt und ein Standort wenigstens einmal eingegeben wird, so dass laufend der aktuelle Standort bestimmt wird, dass bei dem Empfang von zwei Sendern aus den digitalen Funksignalen der aktuelle Standort bestimmt wird und dass der aktuelle Standort ausgegeben wird.

6. Verfahren nach Anspruch 5, **dadurch gekennzeichnet, dass** der aktuelle Standort mit abgespeicherten geographischen Daten abgeglichen wird.

**7.** Verfahren nach Anspruch 5 oder 6, **dadurch gekennzeichnet, dass** der aktuelle Standort für ein Navigationsverfahren verwendet wird.

**8.** Verfahren nach Anspruch 5, 6 oder 7, **dadurch gekennzeichnet, dass** als die digitalen Funksignale DAB-Rundfunksignale verwendet werden, wobei der Standort der Sender durch die TII-Signale in den DAB-Rundfunksignalen angegeben wird.

**9.** Verfahren nach Anspruch 8, **dadurch gekennzeichnet, dass** aus einer Phasendifferenz der TII-Signale bei Empfang eines Senders eine Bewegungsrichtung bestimmt wird.

**10.** Verfahren nach Anspruch 8, **dadurch gekennzeichnet, dass** aus den Phasendifferenzen der TII-Signale von zwei Sendern der aktuelle Standort und die Bewegungsrichtung bestimmt wird.

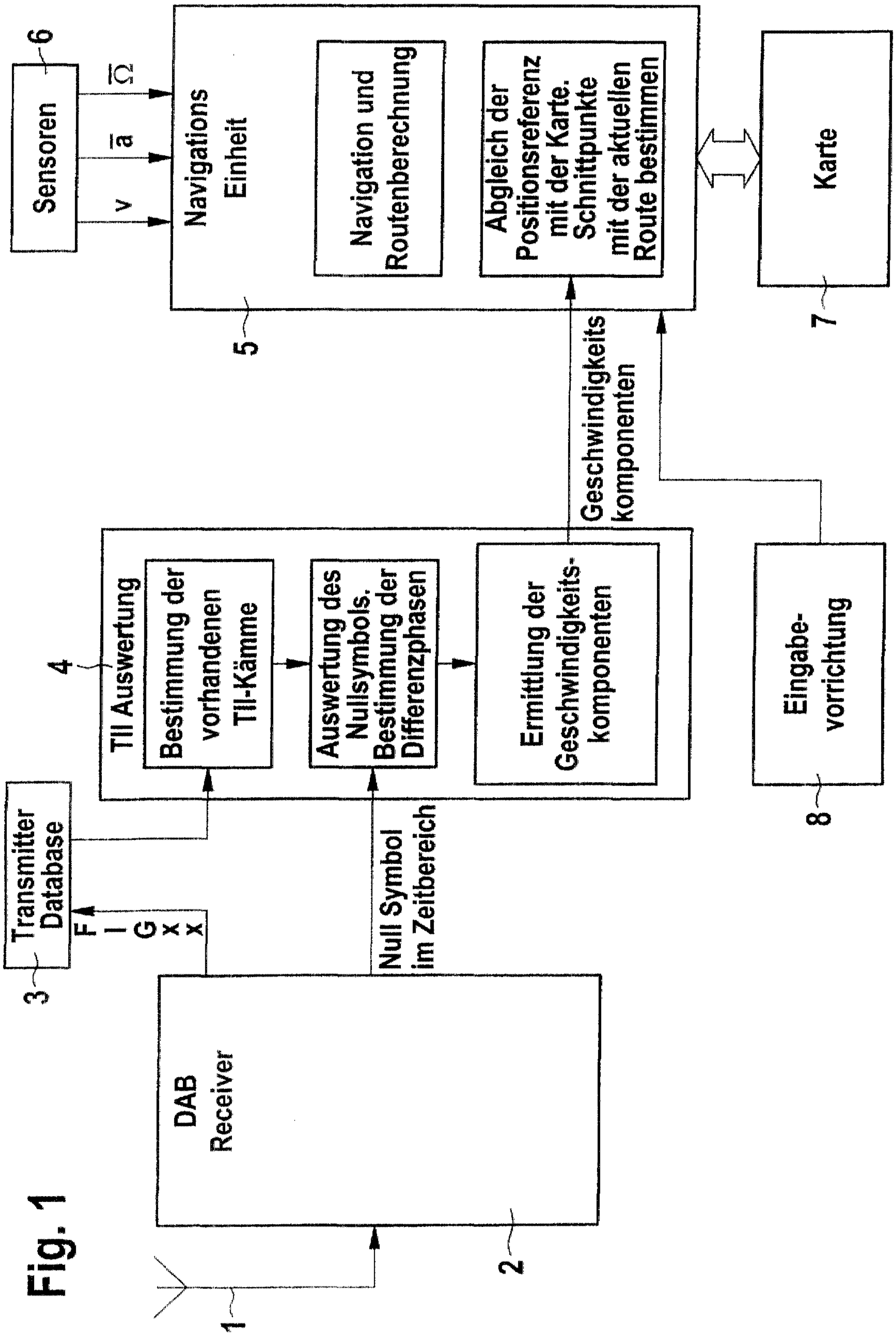
Sensoren
6
v
a
Ω
Navigations Einheit
Navigation und Routenberechnung
Abgleich der Positionsreferenz mit der Karte. Schnittpunkte mit der aktuellen Route bestimmen
5
Karte
7
Geschwindigkeits komponenten
Transmitter Database
3
F I G x x
TII Auswertung
4
Bestimmung der vorhandenen TII-Kämme
Auswertung des Nullsymbols. Bestimmung der Differenzphasen
Ermittlung der Geschwindigkeits-komponenten
Eingabe-vorrichtung
8
Null Symbol im Zeitbereich
DAB Receiver
2
1
Fig. 1

Fig. 2

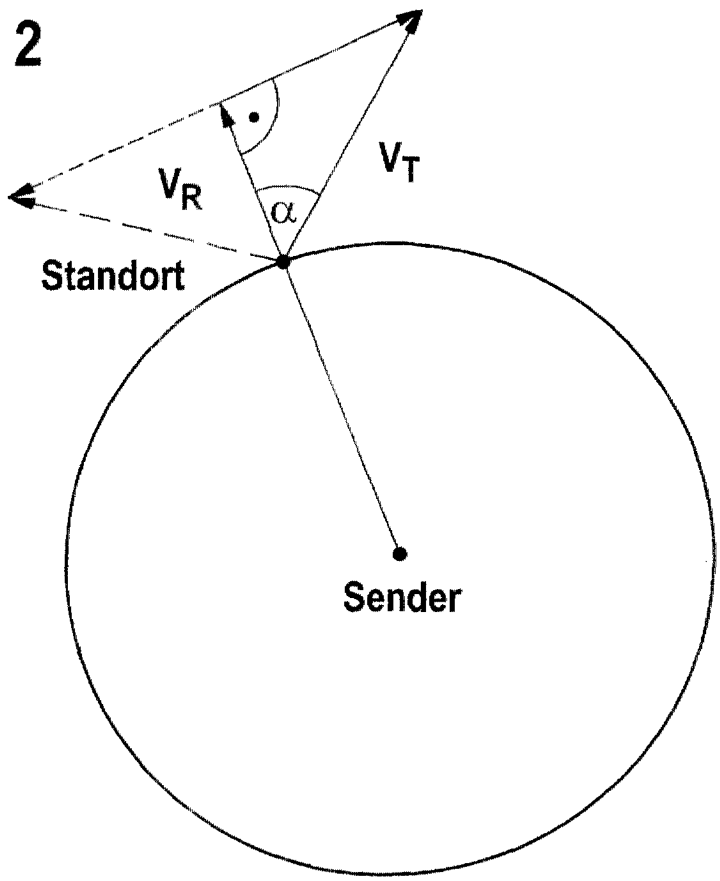
$V_T$
$V_R$
α
Standort
Sender

Fig. 3

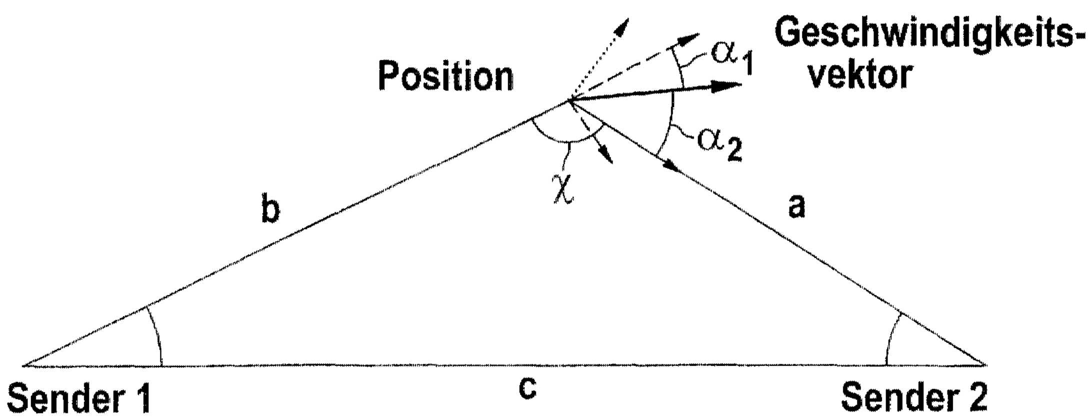
Position
$\alpha_1$
Geschwindigkeits-
vektor
$\alpha_2$
χ
b
a
Sender 1
c
Sender 2

Fig. 4

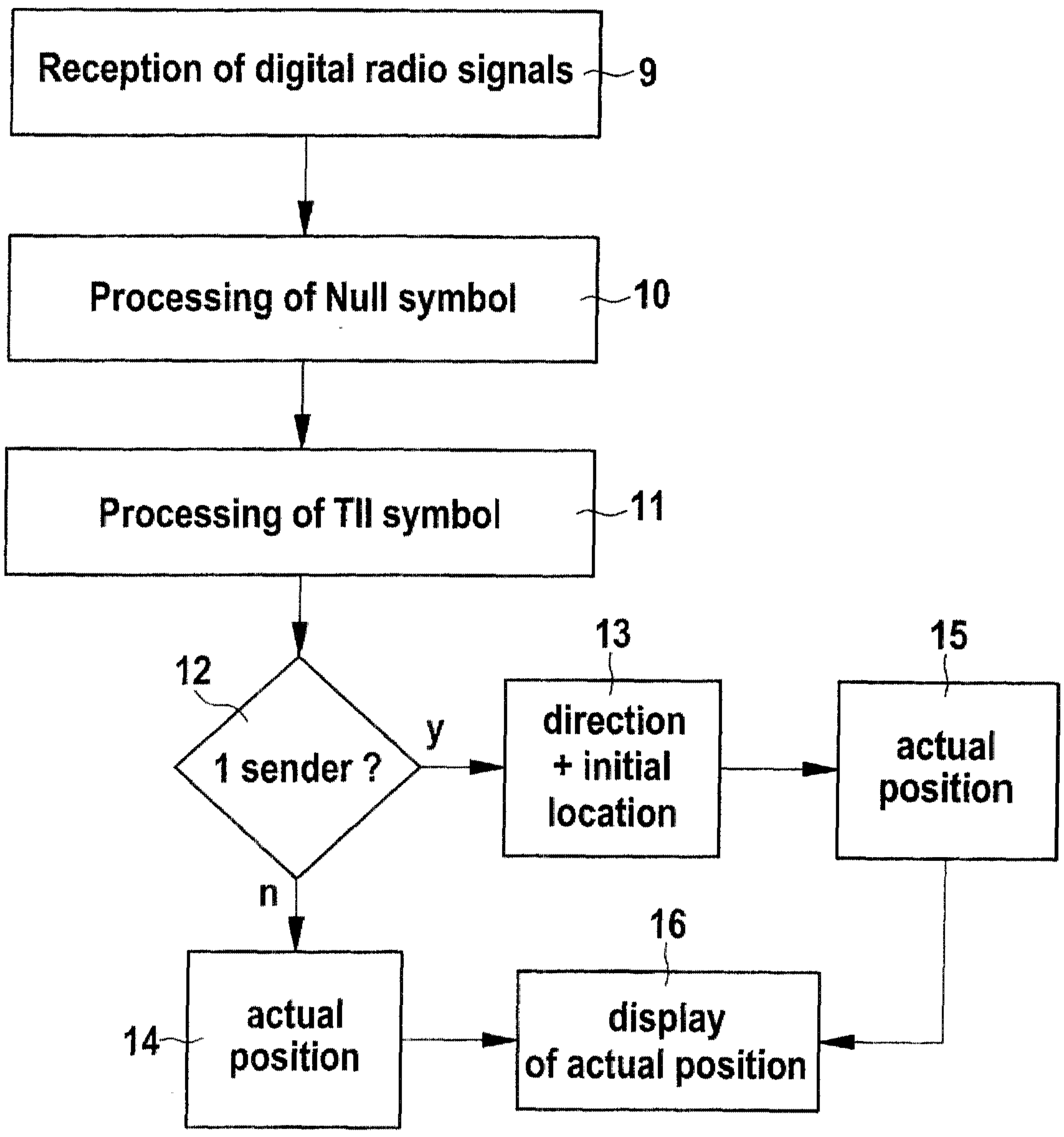
Reception of digital radio signals
9
Processing of Null symbol
10
Processing of TII symbol
11
12
1 sender ?
y
n
13
direction
+ initial
location
15
actual
position
14
actual
position
16
display
of actual position